**Europäisches Patentamt**

**European Patent Office**

**Office européen des brevets**

(19)

(11) Numéro de publication: **0 022 009**
**A1**

## (12) DEMANDE DE BREVET EUROPEEN

(21) Numéro de dépôt: **80400926.4**

(22) Date de dépôt: **20.06.80**

(51) Int. Cl.³: **B 29 H 3/08**
B 29 F 1/022, B 29 F 1/06

(30) Priorité: **26.06.79 FR 7916391**

(43) Date de publication de la demande:
**07.01.81 Bulletin 81/1**

(84) Etats Contractants Désignés:
**AT BE CH DE GB IT LI LU NL SE**

(71) Demandeur: Societe dite : **SOCIETE LYONNAISE DE VENTILATION INDUSTRIELLE SOLYVENT-VENTEC**
**10, Avenue Leclerc**
**F-69800 Lyon(FR)**

(72) Inventeur: **Cottancin, Gérard**
**20, Rue Joséphin Soulary**
**F-69004 Lyon(FR)**

(74) Mandataire: **Bressand, Georges et al,**
**c/o CABINET LAVOIX 2 Place d'Estienne d'Orves**
**F-75441 Paris Cedex 09(FR)**

(54) **Ensemble de moule perfectionné pour le moulage des élastomères.**

(57) Dans cet ensemble de moule pour élastomères du type comportant un bloc central (1) à température régulée ayant des moyens d'injection pour chaque empreinte, alimentés par une buse (32) du dispositif d'injection de la presse, le bloc central (1) comporte des appendices, ou nez (4) de buselettes, rapportés ou venus de matière, en saillie sur deux de ses faces opposées, des buselettes (5) d'injection directe dans les empreintes fixées de façon amovible aux extrémités desdits appendices (4) et adaptées pour coopérer avec des parties adjacentes d'au moins deux moules (2,3), en deux ou plus de deux parties, qui sont disposés sur lesdites faces opposées du bloc central (1), des moyens distincts de ceux du bloc pour commander séparément la température des appendices (4) et des buselettes (5), des moyens pour commander le débit des buselettes, des moyens pour compenser la dilatation du bloc (1) et des moules (2,3), l'ensemble comprenant en outre une buse spéciale (32) d'alimentation du bloc (1) et dont la température peut être commandée.

./...

EP 0 022 009 A1

FIG.1

1

# Ensemble de moule perfectionné pour le moulage des élastomères.

La présente demande concerne d'une façon générale le moulage du caoutchouc et autres matières élastomères par injection, sous pression et elle est plus particulièrement relative aux moules utilisés pour ces moulages.

On sait que les moules utilisés pour le moulage des matières élastomères par injection sous pression présentent certaines analogies avec ceux utilisés pour les matières thermoplastiques.

Dans cette dernière technique, on a utilisé initialement des moules simples, c'est-à-dire comprenant deux parties avec injection de la matière à travers l'une d'entre elles, puis on a utilisé ensuite des moules dits à deux étages, c'est-à-dire comportant deux parties moulantes disposées de part et d'autre d'une partie centrale comportant des canaux de distribution de la matière aux empreintes des deux parties moulantes. Ces derniers moules ont permis de doubler la production des pièces moulées lors de chaque opération.

On utilise actuellement pour le moulage des élastomères la technique de l'injection/compression qui consiste, en utilisant un moule simple en deux parties, à maintenir ces parties légèrement espacées l'une de l'autre lors de l'injection de l'élastomère plastifié, à injecter, dans les empreintes ou au voisinage de celles-ci, un volume de matière un peu supérieur à celui nécessaire pour le remplissage des empreintes et à serrer ensuite les deux parties du moule pour forcer la matière à fluer pour remplir les empreintes, le surplus débordant à l'extérieur de celles-ci.

A la fin de l'opération, la distance qui séparait initialement les parties du moule a diminué jusqu'à une valeur qui est égale à l'épaisseur de la pellicule de matière vulcanisée subsistant entre les empreintes à la

2

fin du cycle de moulage.

On a décrit au brevet français n° 1 487 410 au nom de la Demanderesse un procédé et un dispositif pour supprimer les bavures en commandant avec précision l'écartement des moules à l'injection et à la fermeture.

Suivant ce procédé, on dispose de façon coulissante dans des rainures correspondantes parallèles prévues dans les deux parties du moule deux éléments allongés égaux parallèles en forme de trapèze, et reliés entre eux pour former un cadre de façon que leur position en translation dans les rainures, dont la forme est complémentaire de celle des éléments, détermine l'écartement minimal possible entre les parties du moule.

On règle tout d'abord la position des éléments de façon à déterminer leur écartement avant l'injection, on injecte la matière, puis on déplace les éléments en les faisant coulisser en translation de façon à permettre une fermeture presque complète du moule et on procède alors à la phase de compression jusqu'à ce que les parties du moule viennent en contact avec les deux éléments qui forment ainsi des cales d'épaisseur réglables avec une grande précision.

On connaît enfin différents dispositifs de moulage dans lesquels, comme décrit notamment au brevet français n° 2 022 339, les différentes parties d'un ensemble de moulage comportent des circuits de circulation d'un agent fluide de régulation de la température. Un autre dispositif, mis au point par la demanderesse comprend un bloc d'injection dont la température est commandée, qui comporte des moyens d'injection aux extrémités de courts appendices du bloc, pour injecter la matière plastifiée dans les empreintes d'un moule à travers l'une des deux parties de celui-ci.

Dans ce dispositif, une plaque en une matière isolante est disposée entre le bloc d'injection et la partie adjacente du moule, la température du bloc étant

3

commandée de façon à rester inférieure à la température de vulcanisation de la matière moulée.

La réalisation d'un moule de ce type à double étage afin de doubler le nombre d'empreintes et de ce fait le nombre de pièces moulées à chaque cycle de moulage comme décrit plus haut en référence aux moules à double étage utilisés pour les matières thermoplastiques n'a pas été possible jusqu'à présent en raison notamment des problèmes posés par l'alimentation et la régulation de la température des différentes parties du moule.

L'invention a pour but de résoudre ces problèmes et de réaliser un tel moule à double étage utilisable dans différents types de presses pour le moulage du caoutchouc et autres matières élastomères.

Elle a en conséquence pour objet un ensemble de moule destiné à être utilisé avec une presse pour le moulage des élastomères par injection/compression, notamment pour le moulage des pièces de haute précision, du type à deux étages comportant un bloc central à température régulée, ayant un orifice d'alimentation, des moyens d'injection pour chaque empreinte, ou groupe d'empreintes, alimentés par l'intermédiaire de conduits par une buse du dispositif d'injection de la presse, et un cadre de calage coulissant, à profil oblique, ensemble de moule caractérisé en ce que ledit bloc central comporte des appendices, ou nez de buselettes, rapportés ou venus de matière, en saillie sur deux de ses faces opposées, des buselettes d'injection directe dans les empreintes fixées de façon amovible aux extrémités desdits appendices et adaptées pour coopérer avec des parties adjacentes d'au moins deux moules, en deux ou plus de deux parties, qui sont disposés sur lesdites faces opposées du bloc central, des moyens distincts de ceux du bloc pour commander séparément la température desdits appendices et celle des buselettes, des moyens pour commander le débit des buselettes, des moyens pour compenser

4

la dilation différentielle du bloc et les deux moules, ledit ensemble comprenant en outre une buse spéciale d'alimentation dudit bloc central ayant un corps allongé comportant des moyens de commande de sa température et adaptée pour coopérer avec un appendice central du corps relié auxdites buselettes par un système de conduits.

D'autres caractéristiques et avantages de l'invention apparaîtront au cours de la description qui va suivre.

Au dessin annexé, donné uniquement à titre d'exemple :

la Fig. 1 est une vue en élévation latérale et en coupe d'un moule à double étage suivant l'invention, dans sa position lors de la phase d'injection;

la Fig. 2 est une vue analogue du même moule en position de compression, avant sa fermeture complète et la vulcanisation;

la Fig. 3 est une vue partielle en coupe verticale à plus grande échelle montrant l'agencement d'une buselette comportant des moyens de commande de sa température et de son débit, ainsi que les moyens permettant de compenser la dilatation différentielle;

la Fig. 4 est une vue de dessous suivant la flèche 4 de la Fig. 3 montrant comment est compensée la différence de dilatation entre le bloc régulé et les moules;

la Fig. 5 est une vue en coupe longitudinale verticale de la buse spéciale d'alimentation de l'ensemble de moule destinée à être montée sur le dispositif d'injection de la machine.

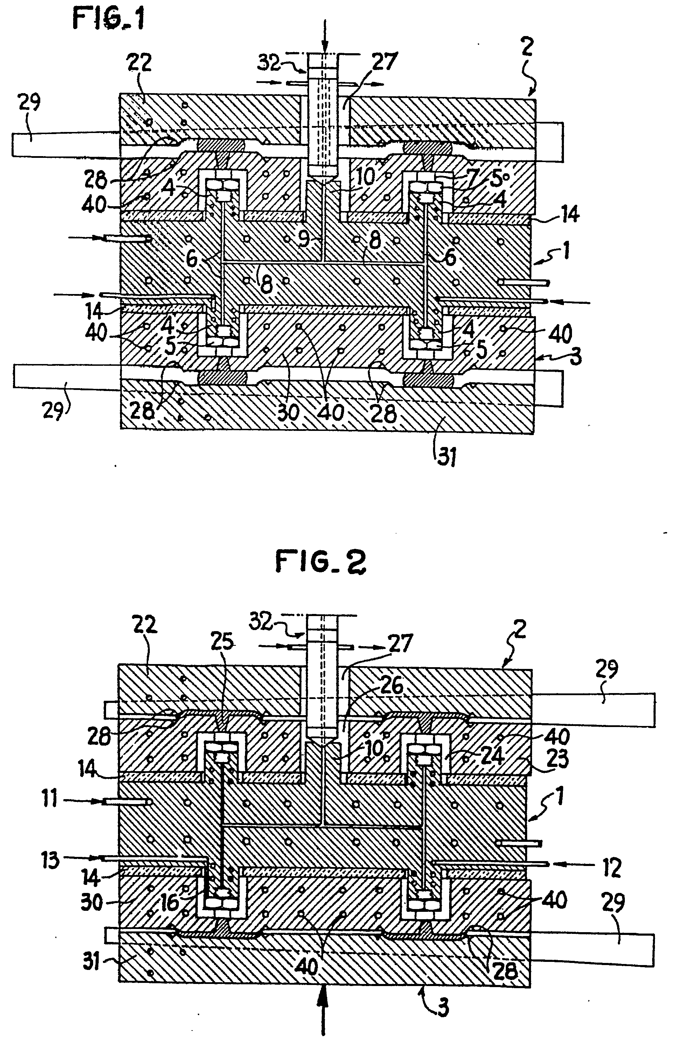

En se référant aux Fig. 1 et 2, l'ensemble de moule suivant l'invention comprend un bloc régulé central 1 et des moules supérieur et inférieur 2 et 3 respectivement.

Le bloc régulé central 1 en métal ou autre maté-

5

riau approprié de forme par exemple parallélépipédique ou autre comporte sur ses deux grandes faces parallèles opposées des appendices en saillie désignés par les termes "nez de buselettes", rapportés ou venus de matière avec le bloc régulé, aux extrémités desquels sont fixées, par exemple vissées des buselettes 5.

Suivant l'exemple représenté, le bloc 1 comporte quatre nez de buselettes 4 disposés symétriquement par rapport à l'axe du bloc 1 mais il est bien évident que l'invention n'est pas limitée à ce nombre, le bloc pouvant bien entendu comporter plus de deux buselettes correspondant à plus de quatre empreintes de moule sur chaque face et disposées de façon dissymétrique par rapport à l'axe du bloc.

Un conduit 6 s'étend axialement dans chacun des nez de buselettes 4 et débouche, d'une part, à l'extrémité pour communiquer avec l'alésage central 7 de chaque buselette et communique, d'autre part, avec des conduits 8 reliés eux-mêmes à un conduit principal 9 qui s'étend axialement dans un cinquième appendice 10 en saillie à peu près au milieu de la face supérieure du bloc 1 et débouche à l'extérieur de celui-ci dans un but qui sera décrit dans la suite.

Le bloc 1 comporte en outre un premier circuit de conduits 11 de régulation de température du bloc proprement dit, un second circuit 12 de régulation de température des nez de buselettes et un conduit 13 de raccordement avec un circuit 16 de régulation de la température des buselettes elles-mêmes, ces trois circuits étant indépendants (Fig.2) et comportant des raccords prévus sur les côtés du bloc, au moyen desquels les différents circuits peuvent être reliés à des dispositifs régulateurs de température de type connu situés à l'extérieur du bloc, ces circuits pouvant assurer la circulation d'huile, d'eau et/ou d'air ou autre fluide caloriporteur pour maintenir les différentes parties à des

6

températures déterminées.

Sur les faces supérieure et inférieure du bloc 1 sont disposées des plaques isolantes 14 en une matière appropriée ayant des propriétés d'isolation thermique et de résistance à la compression, pour isoler les moules supérieur et inférieur 2 et 3 du bloc central 1.

Ces plaques comportent des ouvertures à travers lesquelles s'étendent les nez de buselettes 4 et l'appendice 10.

Chaque buselette 5 à l'extrémité de chaque nez de buselette 4 comporte un corps 15 dans lequel est ménagé le circuit 16 de circulation d'un fluide caloriporteur ménagé dans une bague rapportée 16'.

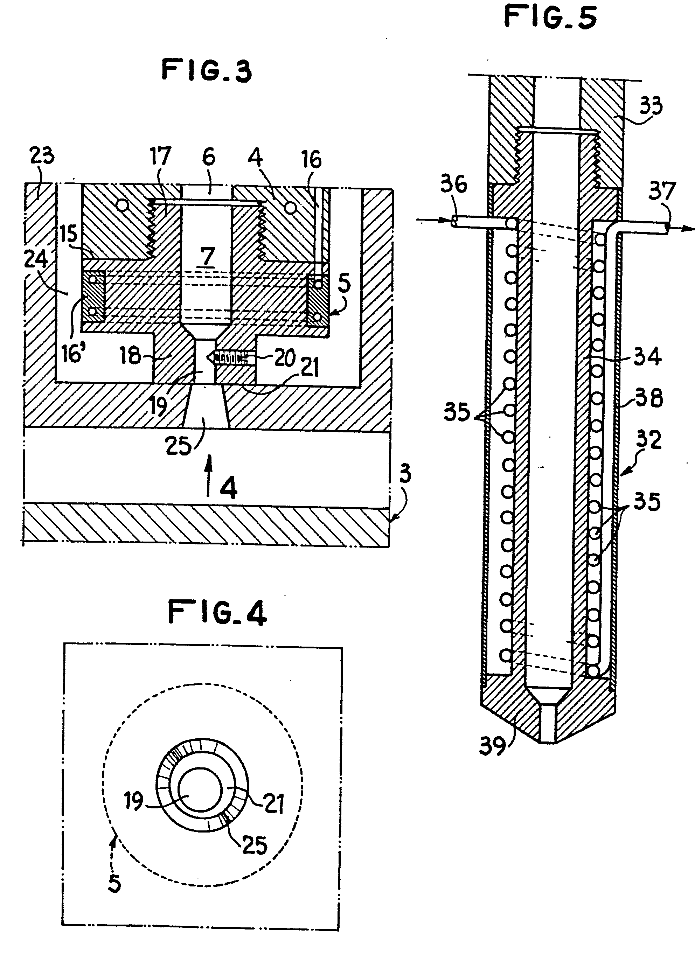

Le corps 15 comporte sur une face un bossage 17 fileté au moyen duquel elle est vissée dans un trou fileté complémentaire du nez 4, et un bossage cylindrique 18 sur sa face opposée (Fig. 3).

Le bossage 18 comporte un orifice de sortie 19, qui peut être partiellement obstrué par une vis-pointeau radiale 20 dont le réglage permet de modifier la section de sortie de l'orifice 19 et, par conséquent, le débit de la buselette.

Enfin, le bossage 18 présente une surface d'extrémité plane 21 adaptée pour être en contact avec une partie d'un moule disposé en contact avec la plaque isolante correspondante 14.

Le moule supérieur 2 comprend une partie supérieure 22 et une partie inférieure 23 en contact avec la plaque isolante supérieure 14.

La partie inférieure 23 présente des cavités 24 à fond plat percé d'un trou central 25, correspondant à chaque empreinte et communiquant avec elle, le fond plat de chaque cavité étant en contact étroit avec la surface plane 21 d'extrémité de la buselette correspondante. Le trou 25 a un diamètre plus grand que celui de l'orifice

7

19 avec lequel il coïncide.

D'une façon avantageuse la cavité 24 a un diamètre plus grand que celui du nez de buselette afin de ménager un léger jeu radial entre le nez 4 et la paroi interne de la cavité 24.

La partie 23 présente en outre une ouverture 26 à travers laquelle s'étend l'appendice central 10 du bloc 1.

La partie supérieure 22 du moule supérieur présente, d'une façon analogue une ouverture centrale 27 qui correspond avec l'ouverture 26 et est destinée à permettre le passage de la buse d'injection spéciale de la machine, qui alimente l'ensemble de moule comme on le décrira dans la suite.

Les empreintes de moulage qui dans l'exemple considéré sont destinées au moulage de membranes, par exemple pour des freins asservis, sont formées par moitié dans l'une et l'autre des parties 22 et 23 du moule. Dans d'autres exemples, ces empreintes peuvent être formées en totalité dans l'une ou dans l'autre partie du moule.

Chaque partie du moule comporte en outre autour de chaque empreinte une gorge 28 ayant en section une forme quelconque, mais présentant de préférence un bord adjacent à l'empreinte d'une largeur réduite au minimum, ce bord étant aussi proche que possible de celui de l'empreinte.

Enfin, les deux parties du moule comportent chacune quatre rainures (dont une seule est visible au dessin), dont deux externes et deux internes, de part et d'autre de l'ouverture centrale 26, 27, dans lesquelles coulissent des cales trapézoïdales allongées 29 dont la position est réglable en translation, comme décrit au brevet n° 1 487 410 de la Demanderesse, et qui permettent de caler les parties du moule avec un écartement réglable dans les différentes phases du moulage.

8

Le moule inférieur 3 comprend une partie supérieure 30 en contact avec la plaque isolante correspondante 14, et une partie inférieure 31, ces deux parties étant identiques en tous points aux parties supérieure et inférieure du moule supérieur 2, à la seule exception qu'elles ne comportent pas d'ouvertures centrales 26,27. En conséquence, ces parties ne seront pas décrites en détail.

Cet ensemble de moule est complété par une buse d'alimentation 32, représentée à plus grande échelle à la Fig.5.

Cette buse est destinée à amener à l'extrémité du conduit 9 de l'appendice 10 du bloc 1 la matière élastomère plastifiée provenant du dispositif d'injection 33 de la machine auquel elle doit être fixée.

La buse 32 doit, en conséquence, présenter une longueur suffisante pour s'étendre à travers au moins la partie supérieure 22 du moule supérieur 2.

La longueur de l'appendice 10 du bloc 1 est en effet limitée afin de pouvoir être maintenu à la même température que le bloc. En conséquence, la buse reliée à la machine doit s'étendre également sur une certaine distance à travers la partie inférieure 23 du moule 2.

En raison de cette longueur inhabituelle, la buse 32 doit être maintenue sur toute sa longueur à la même température que le dispositif d'injection 33 de la machine, ou à une température différente.

En conséquence, la buse 32 comprend un corps 34 autour duquel est disposé un circuit 35 de circulation de fluide comportant des raccords d'entrée et de sortie 36, 37 au voisinage de son extrémité fixée sur la machine et entourée par une enveloppe 38.

A l'exception de sa longueur et de son dispositif de régulation de température, la buse 32 est par ailleurs identique aux buses d'injection classiques et comporte une extrémité de forme conique 39 adaptée pour coopérer avec une partie de forme complémentaire prévue à l'extrémité de l'appendice 10 du bloc 1.

L'ensemble de moule décrit ci-dessus est adapté pour être utilisé sur la plupart des presses pour le moulage des élastomères par injection qui comportent des moyens de contrôle de la température des plateaux.

On monte tout d'abord la buse spéciale sur le dispositif d'injection à la place de la buse normale, plus courte, et on relie le système de régulation de température de la buse à un circuit approprié de la presse.

On relie également les systèmes de régulation de température du bloc central aux circuits de la presse ou à des circuits séparés comportant des régulateurs appropriés.

On remarquera que les parties supérieure du moule supérieur, et inférieure du moule inférieur, qui sont en contact avec les plateaux fixe et mobile de la presse peuvent être chauffées directement par ceux-ci par conduction tandis que les parties inférieure du moule supérieur et supérieure du moule inférieur qui sont adjacentes au bloc central mais isolées de celui-ci par les plaques isolantes 14 doivent comporter leurs propres moyens de chauffage représentés schématiquement en 40 à la Fig.2. Ces moyens peuvent être des circuits de circulation de fluide, soit encore des circuits chauffants électriques ou autres. Si la presse ne comporte pas de plateaux chauffants les deux parties des moules doivent comporter des circuits 40.

Les moules supérieur et inférieur doivent, bien entendu, être maintenus à la température de vulcanisation de l'élastomère, qui est variable selon les types d'élastomères, mais habituellement comprise entre 140 et 240°C, tandis que le bloc central avec les nez de buselette 4 et les buselettes 5 doivent être maintenus à une température bien inférieure afin d'éviter la vulcanisation

10

de l'élastomère et l'obstruction des conduits, cette température étant variable selon les types d'élastomères, mais habituellement comprise entre la température ambiante et 140°C.

Dans ces conditions, il est évident que les moules supérieur et inférieur se dilatent proportionnellement plus que le bloc central, cette dilation étant d'autant plus importante, en valeur absolue, que les moules sont de grandes dimensions et que l'écart de température entre le bloc régulé central et les moules l'est également.

En conséquence, les trous 25 des cavités 24 tendent à se déplacer latéralement par rapport aux orifices 19 des buselettes 5.

Grâce à l'agencement suivant l'invention, le décalage consécutif à cette dilatation est compensé par la différence entre les diamètres des orifices 19 et 25.

En effet, la surface du fond de la cavité 24 peut glisser sur la surface d'extrémité 21 de la buselette associée tout en restant en contact avec elle. L'orifice 25 se déplace légèrement cependant que l'orifice 19 de diamètre réduit reste dans les limites de sa circonférence, la surface 21 obturant la différence. Ceci est mis en évidence par la Fig.4.

Pour la mise en oeuvre de l'ensemble de moule suivant l'invention, on utilise la technique décrite au brevet français précité de la Demanderesse, suivant laquelle, après les phases d'approche et de calage du moule, on règle le cadre coulissant dans la position appropriée correspondant à une ouverture E et on injecte après application de la force de verrouillage une quantité prédéterminée de matière dans les cavités du moule.

On interrompt alors l'application de la force de verrouillage pendant 1 à 2 secondes afin de faire coulisser les cadres de calage dans la position appropriée correspondant à un espacement minimal e des parties des

11

moules, puis on applique de nouveau la pression de verrouillage afin de forcer la matière à remplir complètement les cavités, puis on vulcanise.

On comprend que la quantité de matière injectée
doit être mesurée avec la plus grande précision, de
façon à être tout juste supérieure au volume nécessaire
pour remplir chaque empreinte.

En effet, toute quantité de matière en excédent
tend à s'échapper de chaque empreinte et à former autour
d'elle une nappe qui représente une perte et dont, en
outre, l'épaisseur entre les parties du moule nuit à la
précision de la pièce moulée.

Le dispositif à vis 20 suivant l'invention permet
de régler avec une grande précision le débit des buselettes compte tenu des différents facteurs pour diverses
conditions de travail.

Ce réglage du débit en conjugaison avec le réglage du cadre à profil oblique permet un dosage extrêment précis de la quantité de matière injectée dans les
empreintes, de sorte que seule une quantité extrêmement
faible s'échappe de celles-ci et vient alors remplir les
gorges 28, permettant ainsi de réaliser des pièces moulées de très haute précision, pratiquement sans perte
de matière.

Il est évident pour les techniciens que l'ensemble de moule suivant l'invention apporte une amélioration et des avantages considérables dans la technique
du moulage des élastomères et notamment pour la fabrication des pièces de haute précision; on remarquera en
outre que cet ensemble, pouvant être adapté facilement
sur des presses de différents modèles, permet d'utiliser
celles-ci dans de meilleurs conditions et de façon plus
rentable en élargissant l'éventail de leurs possibilités.

12

REVENDICATIONS

1. Ensemble de moule destiné à être utilisé avec une presse pour le moulage des élastomères par injection/compression, notamment pour le moulage des pièces de haute précision, du type à deux étages comportant un bloc central à température régulée, ayant un orifice d'alimentation, des moyens d'injection pour chaque empreinte, ou groupe d'empreintes, alimentés par l'intermédiaire de conduits par une buse du dispositif d'injection de la presse, et un cadre de calage coulissant, à profil oblique, ensemble de moule caractérisé en ce que ledit bloc central (1) comporte des appendices, ou nez (4) de buselettes, rapportés ou venus de matière, en saillie sur deux de ses faces opposées, des buselettes (5) d'injection directe dans les empreintes fixées de façon amovible aux extrémités desdits appendices (4) et adaptées pour coopérer avec des parties adjacentes d'au moins deux moules (2,3), en deux ou plus de deux parties, qui sont disposées sur lesdites faces opposées du bloc central (1), des moyens (13,16) distincts de ceux du bloc pour commander séparément la température desdits appendices (4) et celle des buselettes (5), des moyens (20) pour commander le débit des buselettes (5), des moyens (19, 21) pour compenser la dilation différentielle du bloc (1) et des deux moules (2,3), ledit ensemble comprenant en outre une buse spéciale (32) d'alimentation dudit bloc central (1) ayant un corps allongé comportant des moyens (35) de commande de sa température et adaptée pour coopérer avec un appendice central (10) du corps relié auxdites buselettes (5) par un système de conduits.

2. Ensemble de moule suivant la revendication 1, caractérisé en ce que chacun desdits appendices (4) comportant les buselettes (5) s'étend, à travers une plaque isolante (14), dans une cavité (24) de la partie adjacente du moule associé (2,3) ménagée au droit de

13

chaque empreinte, chaque cavité (24) ayant une largeur supérieure à celle du nez (4) de buselette et de la buselette (5) associée et un fond plat (21) dans lequel est percé l'orifice (25) de remplissage de l'empreinte et avec lequel ladite buselette est en contact direct.

3. Ensemble de moule suivant la revendication 2, caractérisé en ce que les moyens pour compenser la dilatation différentielle entre le corps et les moules comprennent sur chaque buselette une surface d'extrémité plane en contact à glissement avec le fond plat (21) de la cavité associée, l'orifice de sortie de la buselette (4) coïncidant avec l'orifice (25) de remplissage de l'empreinte ou groupe d'empreintes, mais ayant un diamètre plus petit que ce dernier.

4. Ensemble de moule suivant la revendication 1, caractérisé en ce que lesdits moyens pour commander le débit des buselettes sont constitués par une vis pointeau (20) réglable dans un trou radial fileté du corps de la buselette (5) pour modifier la section de son orifice de sortie.

5. Ensemble de moule suivant la revendication 1, caractérisé en ce que les deux parties de l'un des moules (2,3) comportent une ouverture centrale (26) à travers laquelle s'étend ledit appendice central (10) du bloc (1).

6. Ensemble de moule suivant la revendication 5, caractérisé en ce que le corps (38) de la buse spéciale d'alimentation présente une longueur à peu près égale à l'épaisseur du moule à travers lequel elle s'étend.

7. Ensemble de moule suivant la revendication 6, caractérisé en ce que les moyens (35) de commande de la température du corps de la buse (32) sont constitués par un circuit de circulation de fluide.

8. Ensemble de moule suivant l'une quelconque des revendications précédentes, destiné à être utilisé avec une machine à plateaux chauffants, caractérisé en

14

ce que la partie de chaque moule située à l'extérieur est chauffée directement par conduction, les parties opposées des moules ayant des moyens de commande de température qui leur sont propres.

9. Ensemble de moule suivant l'une quelconque des revendications 1 à 7, caractérisé en ce que les parties extérieures et intérieures des moules comportent chacune un circuit de commande de sa température.

FIG.1

FIG.2

**FIG.5**

**FIG.3**

**FIG.4**

Office européen
des brevets

**RAPPORT DE RECHERCHE EUROPEENNE**

| Catégorie | Citation du document avec indication, en cas de besoin, des parties pertinentes | Revendication concernée |
|---|---|---|
| A | RESEARCH DISCLOSURE, février 1977 Vant Hants GB "Runner insulation in moulding apparatus", pages 52-53 <br> * En entier * | 1 |
| | -- | |
| A | US - A - 2 535 132 (O.E. HERMANNS) <br> * Ensemble du brevet * | 1 |
| | -- | |
| DA | FR - A - 2 022 339 (OSLEY & WHITNEY) <br> * Page 4, ligne 27 - page 8, ligne 9; figures 1-4 * | 1,9 |
| | -- | |
| A | FR - A - 2 345 287 (GELLERT) <br> * Page 5, lignes 5-27; figures 2,3 * | 1,3 |
| | -- | |
| A | US - A - 2 672 653 (R.L. SIMPKINS) <br> * Colonne 4, ligne 33 - colonne 5, ligne 10; figure 3 * | 1,4 |
| | -- | |
| A | SPE JOURNAL, vol. 27, septembre 1971 Greenwich US G.B. RHEINFRANK: "You can injection-mold alkyd and polyester compounds at high speeds", pages 30-32 <br> * Figure 3 * | 1,7 |
| | -- <br> ./. | |

**CLASSEMENT DE LA DEMANDE (Int. Cl. 3)**

B 29 H 3/08
B 29 F 1/022
B 29 F 1/06

**DOMAINES TECHNIQUES RECHERCHES (Int. Cl. 3)**

B 29 F
B 29 H

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-09-1980 | BOLLEN |

OEB Form 1503.1  06.78

## RAPPORT DE RECHERCHE EUROPEENNE

Office européen
des brevets

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| A | <u>FR - A - 2 408 445</u> (DESMA-WERKE)<br>* Ensemble du document *<br><br>-- | 1 | |
| A | <u>FR - A - 1 263 288</u> (GALLOIS)<br>* Ensemble du brevet *<br><br>-- | 1 | |
| A | <u>US - A - 3 867 080</u> (R.G. BRUDER)<br>* Ensemble du brevet *<br><br>-- | 1 | DOMAINES TECHNIQUES RECHERCHES (Int. Cl. 3) |
| A | PLASTVERARBEITER, vol. 29, no. 4, avril 1978<br>Speyer/Rhein DE<br>"Mehr-Etagen-Spritzgiesswerkzeuge"<br>pages 185-188<br><br>---- | | |

OEB Form 1503.2  06.78